(19) **Europäisches Patentamt**

**European Patent Office**

**Office européen des brevets**

(11) **EP 1 361 016 B1**

(12) **EUROPEAN PATENT SPECIFICATION**

(45) Date of publication and mention
of the grant of the patent:
**09.11.2005 Bulletin 2005/45**

(51) Int Cl.$^7$: **B23K 35/368**, B23K 35/30

(21) Application number: **03008814.0**

(22) Date of filing: **23.04.2003**

(54) **Flux-cored wire for stainless steel welding**

Fülldraht zum Schweissen von rostfreiem Stahl

Fil fourré pour le soudage d'acier inoxydable

(84) Designated Contracting States:
**DE FR SE**

(30) Priority: **30.04.2002 JP 2002129419**

(43) Date of publication of application:
**12.11.2003 Bulletin 2003/46**

(73) Proprietor: **KABUSHIKI KAISHA KOBE SEIKO SHO**
**Kobe-shi, Hyogo 651-8585 (JP)**

(72) Inventors:
• **Watanabe, Hirohisa, Fujisawa Plant**
**Fujisawa-shi, Kanagawa 251-0014 (JP)**
• **Miyazaki, Kuniaki, Fujisawa Plant**
**Fujisawa-shi, Kanagawa 251-0014 (JP)**

(74) Representative: **Müller-Boré & Partner**
**Patentanwälte**
**Grafinger Strasse 2**
**81671 München (DE)**

(56) References cited:
**EP-A- 0 450 794          US-A- 4 131 784**
**US-A- 5 124 529          US-A- 5 124 530**
**US-A1- 2002 008 096**

• **PATENT ABSTRACTS OF JAPAN vol. 012, no. 208 (M-709), 15 June 1988 (1988-06-15) & JP 63 013695 A (KOBE STEEL LTD), 20 January 1988 (1988-01-20)**

**Description**

The present invention relates to a flux-cored wire, for stainless steel welding, capable of reducing water-soluble Cr contained in slag and fumes produced during welding using the flux-cored wire.

The quantity of flux-cored wires used in recent years has increased owing to the capability of flux-cored wires in ensuring excellent welding work and efficient welding. The ratio of the quantity of flux-cored wires to the total quantity of welding wires used for stainless steel welding is high, and various flux-cored wires of compositions respectively suitable for welding various kinds of base metals, and various flux-cored wires for different welding positions have been developed. Slag and fumes produced when the conventional flux-cored wire for stainless steel welding is used for welding contain Cr in a Cr content of 10% by mass or above. This Cr contains water-soluble Cr, namely, hexavalent Cr.

The awareness of global environmental problems represented by environmental pollution with dioxin and flon has become high in recent years, and the use of Cr-plated steel sheets for automotive purposes has been suppressed. Restrictions are placed on the disposal of slag that is produced by welding because the slag contains hexavalent Cr. The hexavalent Cr content of the slag measured by a released metal content test must be not greater than a reference value of 1.5 ppm. Techniques for reducing the content of released hexavalent Cr in fumes produced by welding have been proposed (JP-A No. 114447/1977).

The released hexavalent Cr content of fumes treated by an invention disclosed in JP-A No. 52-114447 is 700 ppm at a minimum, which is a very high content.

Methods of suppressing the elution of hexavalent Cr by chemically processing solids containing hexavalent Cr and waste liquids containing hexavalent Cr are proposed in JP-A No. 113676/1998 and 248543/1997. However, it is fundamentally important to suppress the production of hexavalent Cr that is injurious to human bodies.

The present invention has been made in view of the foregoing problems and it is therefore an object of the present invention to provide a flux-cored wire for stainless steel welding capable of reducing the hexavalent Cr content of slag and fumes produced by stainless steel welding and of ensuring satisfactory welding work.

A flux-cored wire for stainless steel welding according to the present invention comprises a metal tube, and a flux filled in the metal tube; wherein the content of a Si source contained in both the metal tube and the flux or in either the metal tube or the flux in terms of Si content [Si] expressed by the ratio in percent of the mass of the Si source to the total mass of the flux-cored wire is in the range of 1.0 to 4.0% by mass,

the content of a Ti source contained in both the metal tube and the flux or either the metal tube or the flux in terms of Ti content [Ti], and the content of a Zr source contained in both the metal tube and the flux or either the metal tube or the flux in terms of Zr content [Zr] meet an inequality:

$$[Si]/([Ti] + [Zr]) \geq 0.8,$$

the content of a Cr source contained in both the metal tube and the flux or in either the metal tube or the flux in terms of Cr content [Cr] is in the range of 16 to 30% by mass, and

the flux contains one or two kinds of a Na source and a K source in a Na source content in terms of Na content [Na], and a K source content in terms of a K content [K] meeting an inequality:

$$([Na] + [K]) \times [Cr]^2 \leq 50,$$

the sum of the Ti content [Ti] and the Zr content [Zr] is in the range of 0.8 to 3.0% by mass, and the sum of the Na content [Na] and the K content [K] is in the range of 0.03 to 0.15% by mass, and wherein [Ti], [Zr], [Na], [K], [Cr] are expressed in % by mass of the total mass of the flux-cored wire.

The flux-cored wire for stainless steel welding is further characterized in that the content of a F source contained in the flux in terms of F content is 0.010 to 0.120% by mass to the total mass of the flux-cored wire.

The flux-cored wire for stainless steel welding is further characterized in that the metal tube is formed of a stainless steel containing Cr in a Cr content of 18% by mass or above.

The present invention reduces the hexavalent Cr concentrations of slag and fumes produced by welding stainless steels and improves welding performance.

Fig. 1 is a graph showing the variation of the respective water-soluble Cr concentrations of fumes and slag produced by welding with the Cr content of a wire.

Fig. 2 is a graph showing the dependence of the water-soluble Cr concentration of fumes on the Na+K content and the Cr content of wires.

Fig. 3 is a graph showing the variation of the water-soluble Cr concentration of fumes with welding current (Shielding

gas: 100% $CO_2$ gas).
Fig. 4 is a graph showing the variation of the water-soluble Cr concentration of fumes with the Ar concentration of the shielding gas (Welding current: 200 A).

The present invention will be described hereinafter. The inventors of the present invention have found through the investigation of flux-cored wires for stainless steel welding that, when both slag and fumes contain hexavalent Cr, the Cr content of fumes is always several tens to several hundreds times higher than that of slag. Therefore, the quantity of hexavalent Cr contained in slag can be reduced necessarily to a desired level by reducing the quantity of hexavalent Cr contained in fumes. It was found through the examination of the compositions of slag produced by flux-cored wires having the same Cr content that the eluted hexavalent Cr value of slag produced by wires having a Si content is smaller than that of slag produced by rutile type covered wires. The inventors of the present invention made experimental studies on the basis of the foregoing facts to solve the foregoing problems and have found that the quantity of eluted hexavalent Cr contained in slag and fumes can be reduced by adjusting the slag-producing components of wires, reducing the quantities of Na and K and increasing the quantity of Cr contained in hoops (tubes), and satisfactory welding work can be achieved.

The effects of the components and the limited composition of a flux-cored wire for stainless steel welding according to the present invention will be described. In the following description, [Si] represents Si source content in terms of Si content, and the contents of other sources of elements will be similarly expressed.

(1) Si: 1.0 to 4.0% by mass

Conversion of slag and fumes into amorphous substances, i.e., vitrification of slag and fumes, is important for the reduction of the quantity of eluted Cr. Addition of a Si source is effective in promoting vitrification without spoiling welding performance. The addition of the Si source is ineffective when Si source content is below 1.0% by mass and slag removability deteriorates greatly when the Si source content exceeds 4.0% by mass. Si sources are Si contained in the metal tube of the flux-cored wire, and metal Si, and Si compounds including Fe-Si, silica sand and feldspar contained in the flux.

(2) Ti and/or Zr: $[Si]/([Ti] + [Zr]) \geq 0.8$

Ti and Zr are added to adjust welding performance. If Ti content, Zr content or the sum of Ti content and Zr content is larger than Si content, the vitrification ratio of slag and fumes is low and the quantity of eluted Cr tends to increase. Therefore, Ti content, Zr content or the sum of Ti content and Zr content is controlled in connection with Si content. To increase the vitrification ratio and to reduce the quantity of eluted Cr, $([Ti] + [Zr]) \leq [Si]/0.8$. Ti and Zr improve the covering performance of slag produced by welding and improve the shape of beads and hence it is required that $([Ti] + [Zr]) \geq 0.8\%$ by mass. If $([Ti] + [Zr]) > 3.0\%$ by mass, slag is excessively hard and slag removability deteriorates. Therefore, it is required that $(([Ti] + [Zr])$ is in the range of 0.8 to 3.0% by mass.

Ti sources include Ti contained in the metal tube, and metal Ti or Fe-Ti, and an oxide, such as rutile, contained in the flux. Zr sources include Zr contained in the metal tube, and Zr oxide or a Zr compound, such as Zr sand, contained in the flux.

(3) Cr: 16 to 30% by mass

The quantity of eluted Cr contained in slag and fumes produced by welding is on an insignificant level if the content of Cr, which is an essential component of a stainless steel, is less than 16% by mass. The adjustment of welding performance is very difficult if the Cr content exceeds 30% by mass.
Therefore, the Cr content is in the range of 16 to 30% by mass.

More preferably, the metal tube is formed of a stainless steel having a Cr content of 18% by mass or above to use the metal tube having a Cr content of 18% by mass or above instead of the flux as a Cr source to reduce the quantity of eluted Cr. Stainless steels having a Cr content of 18% or above are SUS430, SUS304, SUS304L, SUS309S and such specified by JIS.

(4) Na Source and/or K Source: $([Na] + [K]) \times [Cr]^2 \leq 50$

Since increase in Na content and K content causes the quantity of eluted Cr to increase, it is preferable that Na content and K content are small. However, the addition of Na and K is effective in improving arc stability. The inventors of the present invention found that the quantity of eluted Cr and the Cr content of the wire correlate, and the quantity of eluted Cr increases at an exponential rate as the Cr content of the wire increases.

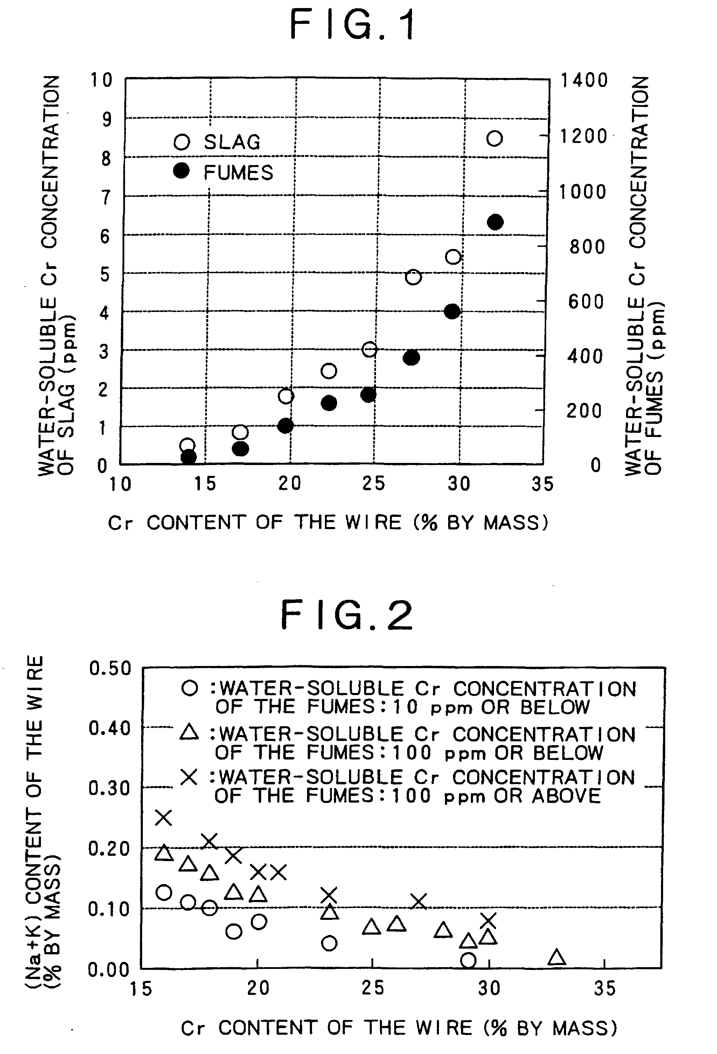

Fig. 1 is a graph showing the variation of the respective water-soluble Cr concentrations of fumes and slag produced by welding with the Cr content of a wire. The welding was performed under Welding condition No. 1 shown in Table 5. As obvious from Fig. 1, the Cr content of the wire, and the quantities of water-soluble Cr contained respectively in the slag and the fumes correlate, and the quantities of water-soluble Cr contained respectively in the slag and the fumes increase at exponential rates, respectively, as the Cr content of the wire increases. The water-soluble Cr concentration of the fumes is more than hundred times greater than that of the slag for the same Cr content of the wire.

The inventors of the present invention made studies of the relation between the Cr content, Na content and K content of a wire and the water-soluble Cr concentration of fumes and found that the quantity of eluted Cr can be reduced and satisfactory welding performance can be maintained when the inequality: $([Na] + [K]) \times [Cr]^2 \leq 50$ is satisfied. Fig. 2 is a graph showing the dependence of the water-soluble Cr concentration of fumes on the Na+K content and the Cr content of wires, in which the Na+K content is measured on the vertical axis and the Cr content is measured on the horizontal axis. Welding was performed under Welding condition No. 1. shown in Fig. 5. In Fig. 2, triangles indicate conditions where the water-soluble Cr concentration is 100 ppm or below, circles indicate conditions where the water-soluble Cr concentration is 10 ppm or below, and crosses indicate conditions where the water-soluble Cr concentration is greater than 100 ppm. As obvious from Fig. 2, the water-soluble Cr concentration of fumes can be reduced to 100 ppm or below (conditions indicated by triangles and circles) by reducing the Na+K content of the wire according to the Cr content of the wire. A curve passing the triangles can be represented by an expression: $([Na] + [K]) \times [Cr]^2 = 50$. Conditions indicated by triangles and circles, where the water-soluble Cr concentration of fumes is 100 ppm or below are in a region represented by $([Na] + [K]) \times [Cr]^2 \leq 50$. Thus, the flux-cored wire of the present invention meets the condition represented by: $([Na] + [K]) \times [Cr]^2 \leq 50$.

Arc stability becomes unsatisfactory if the Na and the K content of a flux-cored wire are reduced to null. Therefore, it is required that the flux-cored wire contains Na and K such that ([Na] + [K]) is in the range of 0.03 to 0.15% by mass. Possible Na sources and K sources are fluorides or oxides of Na and K, and Na compounds and K compounds, such as feldspar.

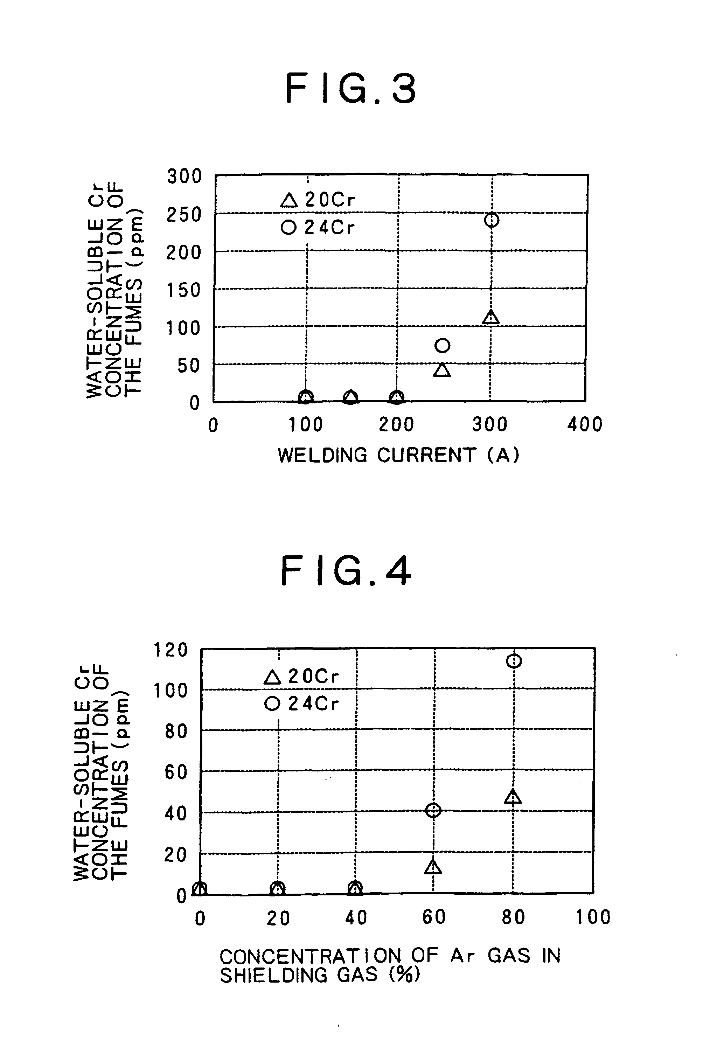

Fig. 3 is a graph showing the variation of the water-soluble Cr concentration of fumes with welding current, in which the water-soluble Cr concentration of fumes is measured on the vertical axis and welding current is measured on the horizontal axis. Shielding gas was 100% $CO_2$ gas. As obvious from Fig. 3, the water-soluble Cr concentration of fumes increases as the welding current increases beyond 250 A and increases sharply as the welding current increases beyond 300 A. Thus, it is preferable that the welding current is 250 A or below, more preferably, 200 A or below.

Fig. 4 is a graph showing the variation of the water-soluble Cr concentration of fumes with the Ar concentration of the shielding gas, in which the water-soluble Cr concentration is measured on the vertical axis and the Ar concentration is measured on the horizontal axis. The welding current was 200 A. When the shielding gas is $CO_2$ gas, the water-soluble Cr concentration of fumes is very small. The water-soluble Cr concentration of fumes increases as the Ar concentration increases beyond 60% and increases sharply as the Ar concentration increases beyond 80%. Thus, it is preferable that the Ar concentration of a shielding gas consisting of Ar gas and $CO_2$ gas is 80% or below, more preferably, 60% or below.

(5) F: 0.010 to 0.120% by mass

Fluorides dissociate easily in a welding arc and provide an effect of reducing partial pressure of oxygen. Therefore, fluorides are effective in suppressing oxidization of Cr. Further, fluorides are added in order to control flowability of a slag and reduce pits. A fluoride of Na or K is generally used as the fluoride. However, contents of Na and K should be reduced in the present invention. The inventors investigated metal fluorides which do not provide an undesirable effect in the amount of eluted Cr but provide the desirable effects of fluorides. As the result, it was found that $AlF_3$, $MgF_2$ and LiF were effective in stead of a small amount of NaF. When the content of a F source contained in the flux in terms of F content is less than 0.010% by mass to the total mass of the flux-cored wire, the effects are not sufficient. When it is more than 0.12%, spatter generation increases extremely. Other effective fluorides in terms of reduction of the eluted Cr are $CaF_2$, $BaF_2$ and $TiF_4$. However, it is very difficult to obtain good welding performance at the same time by using those fluorides.

Examples

Flux-cored wires shown in Tables 1 to 3 were manufactured by using metal tubes of compositions (percent by mass) shown in Table 4, and welding tests were performed under welding conditions shown in Table 5. Results of evaluation of water-soluble Cr concentrations and welding performance are shown in Tables 6 and 7.

## Table 1

| | Wire No. | Metal tube No. | Chemical composition of wires (Ratio of the mass of the element to the total mass of the wire) | | | | | | | |
| --- | --- | --- | --- | --- | --- | --- | --- | --- | --- | --- |
| | | | Metallic components | | | | | | | |
| | | | Si | Ti | Zr | Cr | Ni | Mn | Fe | Other elements |
| Comparative example | 1 | 1 | 0.4 | 0.03 | 0.01 | 19 | 8.9 | 2.5 | 63 | 0.9 |
| | 2 | 1 | 0.4 | 0.03 | 0.01 | 19 | 8.9 | 2.5 | 56 | 0.5 |
| | 3 | 1 | 0.4 | 0.02 | 0.01 | 19 | 8.9 | 2.5 | 61 | 0.5 |
| | 4 | 1 | 0.4 | 0.03 | 0.01 | 19 | 8.9 | 2.5 | 61 | 0.5 |
| | 5 | 1 | 0.4 | 0.02 | 0.01 | 19 | 8.9 | 2.5 | 60 | 1.3 |
| | 6 | 1 | 0.4 | 0.02 | 0.01 | 19 | 12.5 | 2.5 | 55 | 2.8 |
| | 7 | 1 | 0.4 | 0.04 | 0.01 | 23 | 13.1 | 2.5 | 50 | 2.6 |
| | 8 | 1 | 0.4 | 0.04 | 0.01 | 33 | 8.9 | 2.5 | 49 | 0.3 |
| Example | 9 | 1 | 0.4 | 0.01 | 0.01 | 19 | 8.9 | 2.5 | 61 | 0.7 |
| | 10 | 1 | 0.4 | 0.02 | 0.02 | 19 | 8.9 | 2.5 | 63 | 0.5 |
| | 11 | 1 | 0.4 | 0.02 | 0.02 | 19 | 8.9 | 2.5 | 57 | 0.5 |
| | 12 | 1 | 0.4 | 0.03 | 0.02 | 19 | 12.5 | 2.5 | 56 | 2.6 |
| | 13 | 1 | 0.4 | 0.03 | 0.01 | 19 | 12.5 | 2.5 | 52 | 2.6 |
| | 14 | 1 | 0.4 | 0.04 | 0.01 | 25 | 5.9 | 2.5 | 60 | 0.3 |
| | 15 | 3 | 0.4 | 0.01 | 0.01 | 25 | 0.1 | 2.5 | 65 | 0.6 |
| | 16 | 1 | 0.4 | 0.05 | 0.01 | 29 | 5.9 | 2.5 | 56 | 0.7 |
| | 17 | 3 | 0.4 | 0.01 | 0.01 | 29 | 0.1 | 2.5 | 62 | 0.3 |
| | 18 | 2 | 0.2 | 0.16 | 0.01 | 17 | 0.1 | 2.5 | 74 | 0.3 |
| | 19 | 1 | 0.4 | 0.03 | 0.01 | 17 | 5.9 | 2.5 | 67 | 0.2 |

EP 1 361 016 B1

## Table 2

| | Wire No. | Chemical composition of wires (Ratio of the mass of the element to the total mass of the wire) | | | | | | | | | | | |
| | | Nonmetallic elements | | | | | | | | | | | |
| | | $SiO_2$ | $TiO_2$ | $ZrO_2$ | NaF | LiF | MgF2 | AlF3 | $Na_2O$ | $K_2O$ | $Al_2O_3$ | MgO | Other elements |
| Comparative example | 1 | 0.9 | 1.3 | 1.9 | 0.02 | 0.02 | | | 0.10 | 0.19 | 0.5 | 0.15 | 0.3 |
| | 2 | 8.1 | 1.3 | 1.9 | 0.02 | | | 0.1 | 0.10 | 0.19 | 0.5 | 0.15 | 0.4 |
| | 3 | 2.8 | 1.3 | 2.1 | 0.02 | | | | 0.10 | 0.19 | 0.4 | | 0.8 |
| | 4 | 2.8 | 2.5 | 1.3 | 0.02 | | | | 0.10 | 0.19 | 0.4 | 0.15 | 0.3 |
| | 5 | 3.0 | 1.3 | 1.9 | 0.09 | 0.02 | | | 0.13 | 0.19 | 0.4 | | 0.9 |
| | 6 | 3.0 | 1.3 | 1.9 | | 0.02 | 0.1 | | 0.08 | 0.29 | 0.4 | | 0.9 |
| | 7 | 3.0 | 1.3 | 1.9 | | 0.1 | 0.1 | | 0.08 | 0.17 | 0.4 | | 1.5 |
| | 8 | 2.6 | 1.1 | 1.6 | | | | 0.02 | 0.03 | 0.02 | 0.3 | | 0.2 |
| Example | 9 | 2.6 | 1.2 | 1.6 | 0.02 | 0.12 | | | 0.10 | 0.19 | 0.3 | 0.15 | 1.3 |
| | 10 | 1.7 | 0.8 | 1.3 | 0.02 | 0.09 | | | 0.10 | 0.19 | 0.3 | 0.15 | 1.0 |
| | 11 | 7.3 | 1.3 | 1.9 | 0.02 | | | | 0.10 | 0.19 | 0.3 | | 0.5 |
| | 12 | 4.5 | 0.6 | 0.4 | 0.02 | 0.01 | | | 0.10 | 0.19 | | | 1.0 |
| | 13 | 4.9 | 2.3 | 2.6 | 0.02 | | 0.01 | | 0.10 | 0.19 | | | 0.8 |
| | 14 | 2.6 | 1.3 | 0.5 | | 0.1 | | | 0.05 | 0.12 | | | 1.0 |
| | 15 | 2.6 | 1.3 | 0.5 | | | 0.07 | | 0.05 | 0.12 | 0.6 | 0.15 | 1.0 |
| | 16 | 2.6 | 0.6 | 1.1 | | | | 0.1 | 0.05 | 0.05 | 0.3 | | 0.7 |
| | 17 | 2.6 | 0.7 | 1.1 | | 0.15 | | | 0.05 | 0.05 | 0.3 | 0.15 | 0.7 |
| | 18 | 3.0 | 0.4 | 1.1 | 0.02 | | | 0.1 | 0.10 | 0.19 | 0.3 | | 0.4 |
| | 19 | 2.6 | 1.1 | 1.6 | 0.06 | | | | 0.11 | 0.24 | 0.2 | | 1.0 |

EP 1 361 016 B1

Table 3

| | Wire No. | Weight ratio of wire (%) | Weight ratio of flux (%) | Converted value | | | | | | | Si/(Ti+Zr) | (Na+K)xCr² |
|---|---|---|---|---|---|---|---|---|---|---|---|---|
| | | | | Si | Ti | Zr | Cr | F | Na | K | | |
| Comparative example | 1 | 100 | 26 | 0.8 | 0.8 | 1.4 | 19 | 0.024 | 0.05 | 0.08 | 0.4 | 47 |
| | 2 | 100 | 26 | 4.2 | 0.8 | 1.4 | 19 | 0.077 | 0.05 | 0.08 | 1.9 | 47 |
| | 3 | 100 | 26 | 1.7 | 0.8 | 1.6 | 19 | 0.009 | 0.05 | 0.08 | 0.7 | 47 |
| | 4 | 100 | 26 | 1.7 | 1.5 | 1.0 | 19 | 0.009 | 0.05 | 0.08 | 0.7 | 47 |
| | 5 | 100 | 26 | 1.8 | 0.8 | 1.4 | 19 | 0.055 | 0.10 | 0.08 | 0.8 | 65 |
| | 6 | 100 | 26 | 1.8 | 0.8 | 1.4 | 19 | 0.076 | 0.03 | 0.12 | 0.8 | 54 |
| | 7 | 100 | 26 | 1.8 | 0.8 | 1.4 | 23 | 0.134 | 0.03 | 0.07 | 0.8 | 53 |
| | 8 | 100 | 26 | 1.6 | 0.7 | 1.2 | 33 | 0.014 | 0.01 | 0.01 | 0.8 | 22 |
| Example | 9 | 100 | 26 | 1.6 | 0.7 | 1.2 | 19 | 0.097 | 0.05 | 0.08 | 0.8 | 47 |
| | 10 | 100 | 26 | 1.2 | 0.5 | 1.0 | 19 | 0.075 | 0.05 | 0.08 | 0.8 | 47 |
| | 11 | 100 | 26 | 3.8 | 0.8 | 1.4 | 19 | 0.014 | 0.05 | 0.08 | 1.7 | 47 |
| | 12 | 100 | 26 | 2.5 | 0.4 | 0.3 | 19 | 0.016 | 0.05 | 0.08 | 3.6 | 47 |
| | 13 | 100 | 26 | 2.7 | 1.4 | 1.9 | 19 | 0.015 | 0.05 | 0.08 | 0.8 | 47 |
| | 14 | 100 | 26 | 1.6 | 0.8 | 0.4 | 25 | 0.073 | 0.02 | 0.05 | 1.3 | 44 |
| | 15 | 100 | 26 | 1.6 | 0.8 | 0.4 | 25 | 0.043 | 0.02 | 0.05 | 1.3 | 44 |
| | 16 | 100 | 26 | 1.6 | 0.4 | 0.8 | 29 | 0.068 | 0.02 | 0.02 | 1.3 | 34 |
| | 17 | 100 | 26 | 1.6 | 0.4 | 0.8 | 29 | 0.110 | 0.02 | 0.02 | 1.3 | 34 |
| | 18 | 100 | 26 | 1.6 | 0.4 | 0.8 | 17 | 0.081 | 0.05 | 0.08 | 1.3 | 38 |
| | 19 | 100 | 26 | 1.6 | 0.7 | 1.2 | 17 | 0.027 | 0.07 | 0.10 | 0.8 | 49 |

Table 4

| Metal tube No. | C | Si | Mn | Ni | Cr | Ti | Zr | Fe |
|---|---|---|---|---|---|---|---|---|
| 1 | 0.03 | 0.4 | 1.5 | 8 | 19 | 0.03 | 0.01 | The remainder |
| 2 | 0.02 | 0.3 | 0.4 | 0.2 | 16 | 0.22 | 0.01 | The remainder |
| 3 | 0.02 | 0.5 | 1.8 | 12 | 23 | 0.01 | 0.01 | The remainder |

Table 5

| Welding condition No. | Welding current (A) | Arc voltage (V) | Welding speed (cm/min) | Shielding gas |
|---|---|---|---|---|
| 1 | 200 | 30 | 30 | 100%CO2 |
| 2 | 250 | 32 | 30 | 100%CO2 |
| 3 | 150 | 28 | 30 | 100%CO2 |
| 4 | 200 | 28 | 30 | 80%Ar + 200%CO2 |

Table 6

| | | Wire No. | Welding condition No. | Eluted Cr concentration (ppm) | | Welding performance | | | | Overall judgment |
|---|---|---|---|---|---|---|---|---|---|---|
| | | | | Slag | Fumes | Arc stability | Spatter generation | Slag removability | Coating ability of slag | |
| Comparative example | 1 | 1 | 1 | <1.5 | 180 | ○ | ○ | ○ | ○ | ✕ |
| | 2 | 2 | 1 | <1.5 | <10 | ○ | ○ | ✕ | ✕ | ✕ |
| | 3 | 3 | 1 | <1.5 | 130 | ○ | ○ | ○ | ○ | ✕ |
| | 4 | 4 | 1 | <1.5 | 110 | ○ | ○ | ○ | ○ | ✕ |
| | 5 | 5 | 1 | <1.5 | 120 | ○ | ○ | ○ | ○ | ✕ |
| | 6 | 6 | 1 | <1.5 | 230 | ○ | ○ | ○ | ○ | ✕ |
| | 7 | 7 | 1 | 3 | 320 | ○ | ✕ | ○ | ○ | ✕ |
| | 8 | 8 | 1 | 5 | 650 | ✕ | ✕ | ✕ | ✕ | ✕ |

## Table 7

| | | Wire No. | Welding condition No. | Eluted Cr concentration (ppm) | | Welding performance | | | | Overall judgment |
|---|---|---|---|---|---|---|---|---|---|---|
| | | | | Slag | Fumes | Arc stability | Spatter genera-tion | Slag remova-bility | Coating ability of slag | |
| Example | 1 | 9 | ① | ≦1.5 | ≦10 | O | O | O | O | ◎ |
| | 2 | 9 | ② | ≦1.5 | 10 | O | O | O | O | O |
| | 3 | 9 | ③ | ≦1.5 | ≦10 | O | O | O | O | ◎ |
| | 4 | 9 | ④ | ≦1.5 | 50 | O | O | O | O | O |
| | 5 | 10 | ① | ≦1.5 | ≦10 | O | O | O | O | ◎ |
| | 6 | 11 | ① | ≦1.5 | ≦10 | O | O | O | O | ◎ |
| | 7 | 12 | ① | ≦1.5 | ≦10 | O | O | O | △ | ◎ |
| | 8 | 13 | ① | ≦1.5 | ≦10 | O | O | △ | O | O |
| | 9 | 14 | ① | ≦1.5 | ≦10 | O | O | O | O | ◎ |
| | 10 | 15 | ① | ≦1.5 | ≦10 | O | O | O | O | ◎ |
| | 11 | 16 | ① | ≦1.5 | 20 | O | O | O | O | O |
| | 12 | 17 | ① | ≦1.5 | ≦10 | O | O | O | O | ◎ |
| | 13 | 18 | ① | ≦1.5 | 10 | O | O | O | O | O |
| | 14 | 19 | ① | ≦1.5 | 60 | O | O | O | O | O |

Test methods will be described in the following paragraphs.

[Welding Method and Method of Sampling Fumes and Slag]

Fumes were sampled by a method conforming to "Method of Measuring Total Fumes Produced by Coated Electrode" specified in Z3930, JIS. Fumes were sampled by a fume sampling method obtained by improving the method of measuring total fumes produced by coated electrode specified in Z3930, JIS. A welding torch, a test plate and a carriage were placed in a fume quantity measuring apparatus to collect fumes produced by a flux-cored wire. Welding operations using sample wires were conducted under the welding conditions shown in Table 5, and produced fumes were collected. A filter was removed after the completion of the welding operation, and collected fumes were subjected to tests.

Buildup welding was performed in a flat-position welding mode under welding conditions shown in Table 5, and slag was collected from weld beads in the second layer and layers above the second layer. Since the pieces of collected slag have indefinite shapes and indefinite lengths, the pieces of slag were crushed in an agate mortar into powders, the powders were sifted and powders of particle sizes in the range of 0.5 to 5.0 mm were subjected to tests.

[Elution Test Method]

Water-soluble Cr was eluted by an elution method conforming to a method of detecting metals contained in industrial waste (Environmental Advice in Japan No. 13, Feb. 17, 1973, Revised later). Specifically, water-soluble Cr was eluted from slag by the following procedure.

(1) Distilled water and 50 g of slag were mixed to prepare 500 $cm^3$ of a sample liquid.
(2) The sample liquid prepared by (1) was shaken at a frequency of 200 times/min at an ordinary temperature under the normal pressure for 6 hr by a shaker.
(3) The sample liquid thus shaken by (2) was filtered with a glass fiber filter (1 μm) to obtain a test eluate.

Since fumes were generated in a small quantity, a small quantity of fumes was sampled by a simple method and water-soluble Cr was eluated by the following procedure.

(1) Distilled water and 1 g of fumes were mixed to prepare 100 $cm^3$ of a sample liquid.
(2) The sample liquid prepared by (1) was shaken for 5 min at an ordinary temperature under the normal pressure, and then the sample liquid was shaken at $70°C$ for 2 hr in a thermostatic shaking tank.
(3) The sample liquid shaken by (2) was kept standing still, was cooled to a room temperature, and then the sample liquid was filtered with a glass fiber filer (0.45 $\mu$m) to obtain a test eluate.

The hexavalent Cr concentrations of the test eluates thus prepared were measured by a method specified in K0102, JIS. Measurements obtained by measuring the fumes were multiplied by ten to adjust the measurements to the concentration of the test liquid obtained by processing the slag.

Tables 6 and 7 give the results of tests of the flux-cored wires in comparative examples and examples, respectively. In Table 1, Wires Nos. 9 to 18 are flux-cored wires embodying the present invention. As obvious from Table 7, Examples 1 to 13 using the flux-cored wires Nos. 9 to 18 proved that the flux-cored wires of the present invention achieved both the reduction of the quantity of eluated Cr and satisfactory welding performance.

However, the water-soluble Cr concentrations of fumes produced in Example 2 using the flux-cored wire No. 9 and a high welding current (welding condition 2 given in Table 5) and Example 4 using the flux-cored wire No. 4 and $CO_2$ shielding gas containing 20% Ar gas(welding condition No. 4 given in Table 5) were somewhat greater than those of fumes produced in Example 3 using a low welding current (welding condition 3 given in Table 5) and Example 1 using 100% $CO_2$ shielding gas (welding condition 1 given in Table 5), respectively.

Example 7 using the flux-cored wire No. 12 having a small ([Ti] + [Zr]) was somewhat unsatisfactory in the coating ability of the slag. The slag produced in Example 8 using the flux-cored wire No. 13 having a large ([Ti] + [Zr]) was hard and somewhat unsatisfactory in slag removability.

The metal tube No. 2 of the flux-cored wire No. 12 has a small Cr content as shown in Table 4 relative to the Cr content of the flux-cored wire, and the metal tube No. 1 of the flux-cored wire No. 16 has a small Cr content as compared with a comparatively large Cr content of the flux-cored wire as shown in table 1. Consequently, Examples 11 and 13 respectively using the flux-cored wires 16 and 18 has somewhat large water-soluble Cr concentrations. In Example 14 using the flux-cored wire No. 19 having a large ([Na] + [K]), the water-soluble Cr concentration was somewhat large.

The flux-cored wires in Comparative examples No. 1 to No. 8 have the following problems. The flux-cored wire in Comparative example 1 having a small Si content and a small value of [Si]/([Ti] + [Zr]) is incapable of reducing the Cr concentration of the eluate. The flux-cored wire in Comparative example 2 having an excessively large Si content produced welding slag that was very hard to remove, and was unsuitable for practical welding. The flux-cored wires in Comparative examples 3 and 4 having small values of [Si]/([Ti] + [Zr]) could not satisfactorily reduce the Cr concentration of the eluate. The flux-cored wires in Comparative examples 5 and 6 having a excessively large ([Na] + [K]) relative to [Cr] had an excessively large value of ([Na] + [K]) $\times$ $[Cr]^2$ and could not satisfactorily reduce the Cr concentration of the eluate. The flux-cored wire in Comparative example 7 having an excessively large value of [Cr] as compared with the value of ([Na] + [K]) had an excessively large value of ([Na] + [K]) $\times$ $[Cr]^2$ and could not satisfactorily reduce the Cr concentration of the eluate. The flux-cored wire in Comparative example 8 having an excessively large Cr content was unsatisfactory in the capability of reducing the Cr concentration of the eluate and welding performance.

## Claims

1. A flux-cored wire for stainless steel welding, comprising: a metal tube; and a flux filled in the metal tube;

wherein the content of a Si source contained in both the metal tube and the flux or in either the metal tube or the flux in terms of Si content [Si] expressed by the ratio in percent of the mass of the Si source to the total mass of the flux-cored wire is in the range of 1.0 to 4.0% by mass,

the content of a Ti source contained in both the metal tube and the flux or either the metal tube or the flux in terms of Ti content [Ti], and the content of a Zr source contained in both the metal tube and the flux or either the metal tube or the flux in terms of Zr content [Zr] meet an inequality:

$$[Si]/([Ti] + [Zr]) \geq 0.8,$$

the content of a Cr source contained in both the metal tube and the flux or in either the metal tube or the flux in terms of Cr content [Cr] is in the range of 16 to 30% by mass,

the flux contains one or two kinds of a Na source and a K source in a Na source content in terms of Na content [Na], and a K source content in terms of a K content [K] meeting an inequality:

$$([Na] + [K]) \times [Cr]^2 \le 50,$$

the sum of the Ti content [Ti] and the Zr content [Zr] is in the range of 0.8 to 3.0% by mass, and the sum of the Na content [Na] and the K content [K] is in the range of 0.03 to 0.15% by mass and wherein [Ti], [Zr], [Na], [K], [Cr] are expressed in % by mass of the total mass of the flux-cored wire.

2. The flux-cored wire for stainless steel welding according to claim 1, wherein the content of a F source contained in the flux in terms of F content is 0.010 to 0.120% by mass to the total mass of the flux-cored wire.

3. The flux-cored wire for stainless steel welding according to claim 1 or 2, wherein the metal tube is formed of a stainless steel containing Cr in a Cr content of 18% by mass or above.

**Patentansprüche**

1. Flussmittelkerndraht zum Schweißen von rostfreiem Stahl, umfassend: eine Metallröhre und ein in die Metallröhre gefülltes Flussmittel,
wobei
der Gehalt einer Si-Quelle, welche sowohl in der Metallröhre als auch dem Flussmittel oder entweder in der Metallröhre oder dem Flussmittel enthalten ist, bezogen auf den Si-Gehalt [Si], ausgedrückt durch das Verhältnis in Masse-% der Si-Quelle zu der Gesamtmasse des Flussmittelkerndrahtes, in dem Bereich von 1,0 bis 4,0 Masse-% liegt,
der Gehalt einer Ti-Quelle, welche sowohl in der Metallröhre als auch dem Flussmittel oder entweder in der Metallröhre oder dem Flussmittel enthalten ist, bezogen auf den Ti-Gehalt [Ti], und der Gehalt einer Zr-Quelle, welche sowohl in der Metallröhre als auch dem Flussmittel oder entweder in der Metallröhre oder dem Flussmittel enthalten ist, bezogen auf den Zr-Gehalt [Zr], eine Ungleichung erfüllen:

$$[Si]/([Ti] + [Zr]) \ge 0,8,$$

der Gehalt einer Cr-Qelle, welche sowohl in der Metallröhre als auch dem Flussmittel oder entweder in der Metallröhre oder dem Flussmittel enthalten ist, bezogen auf den Cr-Gehalt [Cr], in dem Bereich von 16 bis 30 Masse-% liegt,
das Flussmittel eine oder zwei Arten einer Na-Quelle und einer K-Quelle in einem Na-Quellengehalt, bezogen auf den Na-Gehalt [Na], und einem K-Quellengehalt, bezogen auf einen K-Gehalt [K], enthält, welche eine Ungleichung erfüllen:

$$([Na] + [K]) \times [Cr]^2 \le 50,$$

wobei die Summe des Ti-Gehalts [Ti] und des Zr-Gehalts [Zr] in dem Bereich von 0,8 bis 3,0 Masse-% liegt und die Summe des Na-Gehalts [Na] und des K-Gehalts [K] in dem Bereich von 0,03 bis 0,15 Masse-% liegt, und wobei [Ti], [Zr], [Na], [K], [Cr] in Masse-% der Gesamtmasse des Flussmittelkerndrahtes ausgedrückt sind.

2. Flussmittelkerndraht zum Schweißen von rostfreiem Stahl nach Anspruch 1, wobei der Gehalt einer in dem Flussmittel enthaltenen F-Quelle, bezogen auf den F-Gehalt, 0,010 bis 0,120 Masse-%, bezogen auf die Gesamtmasse des Flussmittelkerndrahtes, beträgt.

3. Flussmittelkerndraht zum Schweißen von rostfreiem Stahl nach Anspruch 1 oder 2, wobei die Metallröhre aus einem rostfreien Stahl gebildet ist, welcher Cr in einem Cr-Gehalt von 18 Masse-% oder darüber enthält.

**Revendications**

1. Fil fourré pour le soudage de l'acier inoxydable, comprenant un tube de métal et un flux remplissant le tube de métal,

dans lequel le contenu d'une source de Si contenue dans à la fois le tube de métal et le flux, ou soit dans le tube de métal, soit dans le flux, en termes de teneur en Si [Si] exprimée par le rapport en pourcentage de la masse de la source de Si à la masse totale du fil fourré est dans la plage de 1,0 à 4,0 % en masse,

le contenu d'une source de Ti contenue dans à la fois le tube de métal et le flux ou soit dans le tube de métal, soit dans le flux en termes de teneur en Ti [Ti], et le contenu d'une source de Zr contenue dans à la fois le tube de métal et le flux ou soit dans le tube de métal, soit dans le flux en termes de teneur en Zr [Zr] satisfont une inégalité :

$$[Si]/([Ti] + [Zr]) \geq 0,8,$$

le contenu d'une source de Cr contenue à la fois dans le tube de métal et le flux ou soit dans le tube de métal, soit dans le flux en termes de teneur en Cr [Cr] est dans la plage de 16 à 30 % en masse,

le flux contient un ou deux types d'une source de Na et d'une source de K dans un contenu de source de Na en termes de teneur en Na [Na], et un contenu de source de K en termes de teneur en K [K] satisfaisant une inégalité :

$$([Na] + [K]) \times [Cr]^2 \leq 50,$$

la somme de la teneur en Ti [Ti] et de la teneur en Zr [Zr] est dans la plage de 0,8 à 3,0 % en masse, et la somme de la teneur en Na [Na] et de la teneur en K [K] est dans la plage de 0,03 à 0,15 % en masse, et où [Ti], [Zr], [Na], [K], [Cr] sont exprimés en pourcentage en masse de la masse totale du fil fourré.

2. Fil fourré pour le soudage de l'acier inoxydable selon la revendication 1, dans lequel le contenu d'une source de F contenue dans le flux en termes de teneur en F est de 0,010 à 0,120 % en masse de la masse totale du fil fourré.

3. Fil fourré pour le soudage de l'acier inoxydable selon la revendication 1 ou 2, dans lequel le tube de métal est formé d'un acier inoxydable contenu du Cr dans une teneur en Cr de 18 % en masse ou plus.

# FIG.1

WATER-SOLUBLE Cr CONCENTRATION OF SLAG (ppm)

WATER-SOLUBLE Cr CONCENTRATION OF FUMES (ppm)

○  SLAG
●  FUMES

Cr CONTENT OF THE WIRE (% BY MASS)

# FIG.2

(Na+K) CONTENT OF THE WIRE (% BY MASS)

○ :WATER-SOLUBLE Cr CONCENTRATION
    OF THE FUMES : 10 ppm OR BELOW
△ :WATER-SOLUBLE Cr CONCENTRATION
    OF THE FUMES : 100 ppm OR BELOW
✕ :WATER-SOLUBLE Cr CONCENTRATION
    OF THE FUMES : 100 ppm OR ABOVE

Cr CONTENT OF THE WIRE (% BY MASS)

# FIG. 3

# FIG. 4